# EUROPÄISCHE PATENTSCHRIFT

(11) **EP 0 537 377 B1**
(45) Veröffentlichungstag und Bekanntmachung des Hinweises auf die Patenterteilung: **10.05.1995**
(21) Anmeldenummer: 91117721.0
(22) Anmeldetag: 17.10.1991
(51) Int. Cl.: F16L 47/00, F16L 5/02

(54) **Rohrverbindung**
Pipe coupling
Raccord de tuyaux

(43) Veröffentlichungstag der Anmeldung: 21.04.1993
(73) Patentinhaber: WOESTE-VETTER GmbH, D-40223 Düsseldorf (DE)
(72) Erfinder: Woeste, Albrecht, Dipl.-Ing., W-4000 Düsseldorf 1 (DE)
(74) Vertreter: Stenger, Watzke & Ring Patentanwälte

(56) Entgegenhaltungen:
- DE-A- 3 802 804
- DE-B- 1 239 898
- DE-U- 8 800 282
- FR-A- 1 175 789

## Beschreibung

Die Erfindung betrifft eine Rohrverbindung für Gas- und Wasserleitungen zwischen einem Metallrohr- und einem Kunststoffrohrende, insbesondere zum Anschluß von in Gebäuden verlegten Metallrohren an das im Boden verlegte, aus Kunststoffrohren bestehende Gas- bzw. Wasserversorgungsnetz, mit einer glockenartigen Muffe aus Metall, die auf dem Ende des Metallrohres derart abgedichtet angeordnet ist, daß zwischen dem größeren Innendurchmesser der Muffe und dem in die Muffe hineinragenden Ende des Metallrohres ein Ringraum ausgebildet ist, in dem ein Dichtring angeordnet ist.

Eine Rohrverbindung der voranstehenden Art, insbesondere als Zwischenmuffe zur Verbindung von Kabelmänteln aus Metall und Kunststoff, ist aus der DE-B-1 239 898 bekannt. Diese hat den Nachteil, daß die Rohre nur kraftschlüssig unter Verwendung von Gummischichten ineinandergesteckt sind, so daß keine dauerhafte und zuverlässig dichte sowie korrosionsfeste Verbindung zwischen den Enden des Metall- und Kunststoffrohres erzielt wird. Nach einer längeren Betriebszeit könnte ein durch die Rohre geführtes Gas zwischen den ineinandergesteckten Rohren trotz der zwischen dem Kunststoffrohr und dem Stahlrohr angeordneten, als Dichtung wirkenden Gummischichten heraustreten.

Ausgehend von diesem Stand der Technik liegt der Erfindung die Aufgabe zugrunde, eine gattungsgemäße Rohrverbindung zu schaffen, die eine dauerhafte und zuverlässig dichte sowie korrosionsfeste Verbindung zwischen den Enden der Metall- und Kunststoffrohre bildet.

Die erfindungsgemäße Lösung dieser Aufgabenstellung ist dadurch gekennzeichnet, daß an das Ende des Kunststoffrohres ein die Muffe des Metallrohres umschließendes, muffenartiges Spritzgußformstück angeformt ist, dessen freier Innendurchmesser dem Innendurchmesser der Rohre entspricht und dessen Außendurchmesser größer als der Außendurchmesser der glockenartigen Muffe ist, wobei das thermoplastische Material des Spritzgußformstückes den Raum zwischen dem freien Innendurchmesser und dem Innendurchmesser der glockenartigen Muffe eine Vorspannung des Dichtringes bewirkend ausfüllt.

Durch das Umspritzen der am Metallrohr angeordneten, glockenartig ausgebildeten Muffe aus Metall mit dem an das Kunststoffrohr angeformten, muffenartig ausgebildeten Spritzgußformstück schafft die erfindungsgemäß ausgebildete Rohrverbindung eine dauerhaft und zuverlässig dichte sowie korrosionsfeste Verbindung zwischen den ineinandergreifenden Enden der Metall- und Kunststoffrohre, die auch Zugkräfte aufnehmen kann.

Bei einer Weiterentwicklung der erfindungsgemäßen Rohrverbindung ist vorgesehen, daß die glockenartige Muffe im Bereich ihres gegenüber dem Metallrohr größeren Durchmessers mit Öffnungen versehen ist, die durch das thermoplastische Kunststoffmaterial des Spritzgußformstückes ausgefüllt sind. Diese Ausbildung gewährleistet beim radialen Schrumpfen des Kunststoffmaterials, daß sich dieses Material nicht von der Innenwand der Muffe absetzt, weil die an der Innenwand anliegende Kunststoffmasse mit der außenliegenden Masse durch die Öffnungen hindurch verbunden ist. Außerdem wird hierdurch eine Verspannung des Kunststoffes des Spritzgußformstückes mit der Muffe und eine Erhöhung der Zugfestigkeit zwischen den beiden Rohren erzielt.

Zur Verbesserung der Abdichtung zwischen dem Kunststoffrohrende und dem Metallrohrende ist bei einer Weiterbildung der Erfindung vorgesehen, daß der Dichtring als Doppellippendichtring mit U-förmigem Profil ausgebildet ist. Die Lippen des Doppellippendichtringes werden durch das Kunststoffmaterial an die Dichtflächen, nämlich einerseits an die Innenfläche der glockenartigen Muffe und andererseits an die Mantelfläche des in die Muffe hineinragenden Endes des Metallrohres angepreßt.

Schließlich kann bei einer vorteilhaften Ausführungsform der erfindungsgemäßen Rohrverbindung das Spritzgußformstück zu einem das Metallrohr umgreifenden Schutzrohr verlängert sein. Die Länge dieses Schutzrohres entspricht mindestens der Wanddicke der zu durchdringenden Wand, so daß das Schutzrohr die Aufgaben eines Mauerschutzrohres übernehmen kann. Bei dieser Ausführungsform ist es weiterhin vorteilhaft, daß eine in einer zu durchdringenden Wand angeordnete Bohrung fast vollständig mit dem Spritzgußformstück ausgefüllt wird, so daß nur eine geringe Menge von Dicht- oder Füllmasse zur Abdichtung dieser Bohrung benötigt wird.

Weitere Vorteile der erfindungsgemäßen Rohrverbindung ergeben sich aus der nachfolgenden Beschreibung der zugehörigen Zeichnungen, in denen bevorzugte Ausführungsformen der Rohrverbindung dargestellt sind. In den Zeichnungen zeigt:
- Fig. 1: eine erste Ausführungsform der Rohrverbindung im Längsschnitt;
- Fig. 2: die Rohrverbindung gemäß Fig. 1 in einem Querschnitt gemäß der Schnittlinie II-II in Fig. 1 und
- Fig. 3: einen Längsschnitt einer zweiten Ausführungsform der Rohrverbindung mit einem Spritzgußformstück, das zu einem das Metallrohr umgreifenden Schutzrohr verlängert ist.

Ein mit einem Kunststoffrohr 1 zu verbindendes Metallrohr 2 weist an seinem dem Kunststoffrohr 1 zugewandten Ende 3 eine glockenartig ausgebildete Muffe 4 auf, die kraftschlüssig oder formschlüssig mit dem Metallrohr 2 verbunden ist. Die Muffe 4 kann beispielsweise auf das Ende 3 des Metallrohres 2 aufgeschweißt oder aufgeklebt sein. Es ist auch denkbar, daß die Muffe 4 ein Innengewinde hat, welches mit einem an der Mantelfläche des Metallrohres 2 angeordneten Außengewinde korrespondiert. In diesem Fall ist die Muffe 4 auf das Ende 3 des Metallrohres 2 aufgeschraubt.

Die glockenartige Muffe 4 ist derart an dem Ende 3 des Metallrohres 2 angeordnet, daß zwischen dem größeren Innendurchmesser der Muffe 4 und dem in die Muffe 4 hineinragenden Ende 3 des Metallrohres 2 ein Ringraum 5 ausgebildet ist, in dem ein als Doppellippendichtring ausgebildeter Dichtring 6 mit U-förmigem Profil angeordnet ist. Die Lippen 7 des Dichtringes 6 liegen einerseits an der Innenfläche der glockenartigen Muffe 4 und andererseits an der Mantelfläche des in die Muffe 4 hineinragenden Endes 3 des Metallrohres an.

Die glockenartige Muffe 4 ist im Bereich ihres gegenüber dem Metallrohr 2 größeren Durchmessers mit Öffnungen 8 versehen. Die Öffnungen 8 sind vorzugsweise in gleichmäßigem Abstand voneinander in der Muffe 4 angeordnet.

Das mit dem Metallrohr 2 zu verbindende Kunststoffrohr 1 weist an seinem dem Metallrohr 2 zugewandten Ende ein muffenartiges Spritzgußformstück 9 auf, welches einstückig an das Kunststoffrohr 1 angeformt wird. Der freie Innendurchmesser 10 des muffenartigen Spritzgußformstückes 9 entspricht dem Innendurchmesser des Kunststoffrohres 1 und des Metallrohres 2, wogegen der Außendurchmesser des Spritzgußformstückes 9 größer ist als der Außendurchmesser der glockenartigen Muffe 4. Das Spritzgußformstück 9, welches aus thermoplastischem Material besteht, umschließt sowohl das Ende 3 des Metallrohres 2 als auch die Muffe 4, wobei das thermoplastische Material des Spritzgußformstückes 9 den Raum zwischen dem freien Innendurchmesser 10 und dem Innendurchmesser der glockenartigen Muffe 4 ausfüllt und hierbei eine Vorspannung des Dichtringes 6 bewirkt.

Das thermoplastische Material des Spritzgußformstückes 9 füllt weiterhin die Öffnungen 8 der Muffe 4 aus, so daß das beidseitig der Muffe 4 vorhandene thermoplastische Material eine Verspannung des Kunststoffes des Spritzgußformstückes 9 mit der Muffe 4 und damit eine Erhöhung der Zugfestigkeit zwischen den beiden Rohren 1 und 2 bewirkt.

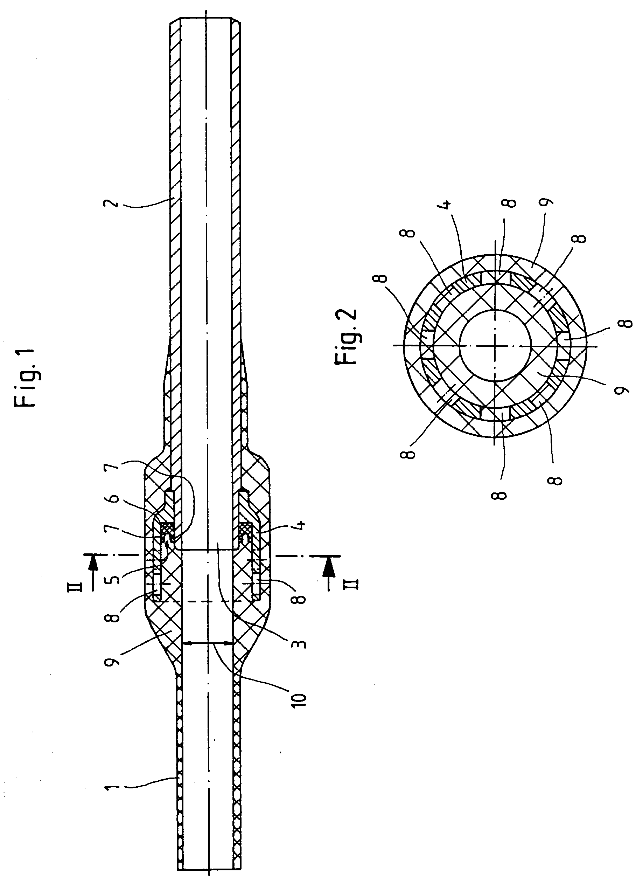

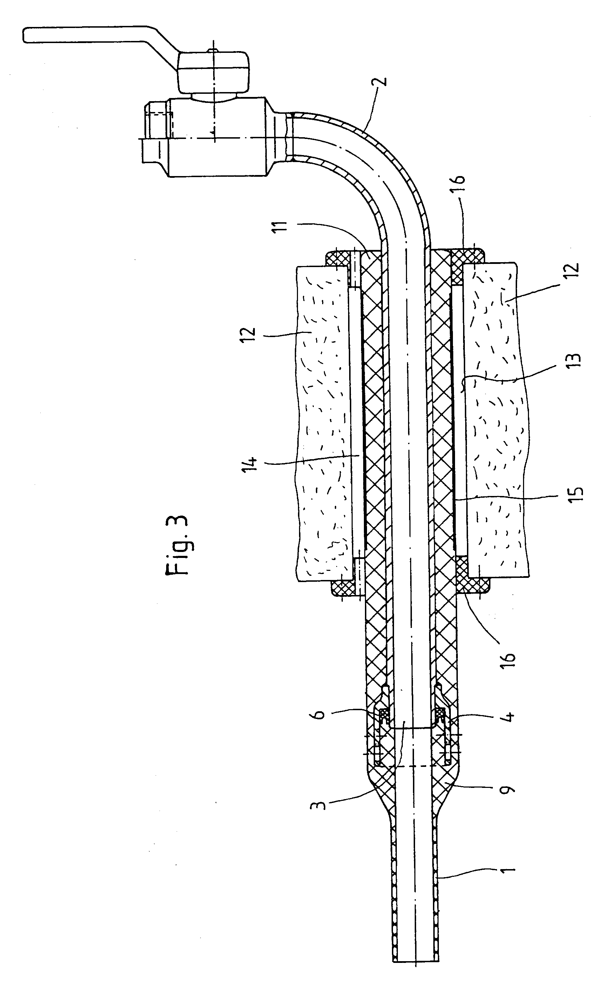

Bei dem in den Figuren 1 und 2 dargestellten Ausführungsbeispiel der Rohrverbindung für Gas- und Wasserleitungen zwischen einem Metallrohr 2 und einem Kunststoffrohr 1 reicht das Spritzgußformstück 9 bis hinter die Verbindungsstelle zwischen der Muffe 4 und dem Metallrohr 2. Bei dem in der Fig. 3 dargestellten zweiten Ausführungsbeispiel ist das Spritzgußformstück 9 zu einem das Metallrohr 2 umgreifenden Schutzrohr 11 verlängert.

Bei diesem Ausführungsbeispiel gemäß Fig. 3 ist die erfindungsgemäße Rohrverbindung als sogenannte Hauseinführung für Gas- und Wasserleitungen ausgebildet. Hierbei ist in einer Mauer 12 eine Bohrung 13 angeordnet, durch die das Metallrohr 2 hindurchgeführt ist. Das Metallrohr ist in der zuvor beschriebenen Weise mit dem Kunststoffrohr 1 verbunden, wobei das Spritzgußformstück 9 zu einem das Metallrohr 2 umgreifenden Schutzrohr 11 verlängert ist und durch die Bohrung 13 in der Mauer 12 greift. Die Bohrung 13 in der Mauer 12 ist zwischen der Mauer 12 und dem Schutzrohr 11 mit einem Füllstoff 14, insbesondere mit einem Quell-Beton-Harz ausgefüllt. Zur Verbesserung der Haftung des Schutzrohres 11 an dem Füllstoff 14 kann auf der Mantelfläche des Schutzrohres 11 ein Haftvlies 15 angeordnet sein. An den Enden der Bohrung 13 sind zur Zentrierung des Metallrohres 2 bei der Montage jeweils ein Zentrierflansch 16 angeordnet, welche ein Herausquellen des Füllstoffes 14 verhindern.

### Bezugszeichenliste

- 1: Kunststoffrohr
- 2: Metallrohr
- 3: Ende
- 4: Muffe
- 5: Ringraum
- 6: Dichtring
- 7: Lippe
- 8: Öffnungen
- 9: Spritzgußformstück
- 10: Innendurchmesser
- 11: Schutzrohr
- 12: Mauer
- 13: Bohrung
- 14: Füllstoff
- 15: Haftvlies
- 16: Zentrierflansch

## Patentansprüche

1. Rohrverbindung für Gas- und Wasserleitungen zwischen einem Metallrohr- und einem Kunststoffrohrende, insbesondere zum Anschluß von in Gebäuden verlegten Rohren an das im Boden verlegte Gas- bzw. Wasserversorgungsnetz, mit einer glockenartigen Muffe (4) aus Metall, die auf dem Ende (3) des Metallrohres (2) derart abgedichtet angeordnet ist, daß zwischen dem größeren Innendurchmesser der Muffe (4) und dem in die Muffe (4) hineinragenden Ende (3) des Metallrohres (2) ein Ringraum (5) ausgebildet ist, in dem ein Dichtring (6) angeordnet ist,
**dadurch gekennzeichnet,**
daß an das Ende des Kunststoffrohres (1) ein die Muffe (4) des Metallrohres (2) umschließendes, muffenartiges Spritzgußformstück (9) angeformt ist, dessen freier Innendurchmesser (10) dem Innendurchmesser der Rohre (1,2) entspricht und dessen Außendurchmesser größer als der Außendurchmesser der glockenartigen Muffe (4) ist, wobei das thermoplastische Material des Spritzgußformstückes (9) den Raum zwischen dem freien Innendurchmesser (10) und dem Innendurchmesser der glockenartigen Muffe (4) eine Vorspannung des Dichtringes (6) bewirkend ausfüllt.

2. Rohrverbindung nach Anspruch 1, dadurch gekennzeichnet, daß die glockenartige Muffe (4) im Bereich ihres gegenüber dem Metallrohr (2) größeren Durchmessers mit Öffnungen (8) versehen ist, die durch das thermoplastische Kunststoffmaterial des Spritzgußformstückes (9) ausgefüllt sind.

3. Rohrverbindung nach Anspruch 1 oder 2, dadurch gekennzeichnet, daß der Dichtring (6) als Doppellippendichtring mit U-förmigem Profil ausgebildet ist.

4. Rohrverbindung nach einem der Ansprüche 1 bis 3, dadurch gekennzeichnet, daß das Spritzgußformstück (9) zu einem das Metallrohr (2) umgreifenden Schutzrohr (11) verlängert ist.

## Claims

1. Pipe connection, for gas pipes and water pipes, between a metal pipe end and a plastic pipe end, in particular for the connection of pipes laid in buildings to the gas supply and water supply network laid in the ground, having a bell-like metal collar (4) which is arranged in a sealed manner on the end (3) of the metal pipe (2) in such a way that an annular space (5) is formed between the larger internal diameter of the collar (4) and the end (3) of the metal pipe (2) protruding into the collar (4), in which annular space a sealing ring (6) is arranged, characterized in that there is moulded onto the end of the plastic pipe (1) a collar-like injection moulding (9) which surrounds the collar (4) of the metal pipe (2) and whose free internal diameter (10) corresponds to the internal diameter of the pipes (1, 2), and whose external diameter is greater than the external diameter of the bell-like collar (4), the thermoplastic material of the injection moulding (9) filling the space between the free internal diameter (10) and the internal diameter of the bell-like collar (4), causing prestressing of the sealing ring (6).

2. Pipe connection according to Claim 1, characterized in that the bell-like collar (4) is provided with openings (8) in the region of its greater diameter relative to the metal pipe (2), which openings are filled by the thermoplastic material of the injection moulding (9).

3. Pipe connection according to Claim 1 or 2, characterized in that the sealing ring (6) is designed as a double lip sealing ring with a U-shaped profile.

4. Pipe connection according to one of Claims 1 to 3, characterized in that the injection moulding (9) is extended to form a protective pipe (11) which encloses the metal pipe (2).

## Revendications

1. Raccord de tuyaux pour des conduites de gaz ou d'eau disposées entre une extrémité de tuyau métallique et une extrémité de tuyau en matière synthétique, en particulier pour raccorder des tuyaux posés dans des bâtiments au réseau d'alimentation en gaz ou en eau posé dans le sol, comprenant un manchon en métal (4) en forme de cloche, qui est monté étanche à l'extrémité (3) du tuyau métallique (2), de façon à ménager, entre le diamètre intérieur supérieur du manchon (4) et l'extrémité (3) du tuyau métallique (2) pénétrant dans le manchon (4), un espace annulaire (5) dans lequel est disposé un anneau d'étanchéité (6), caractérisé en ce qu'à l'extrémité du tuyau en matière synthétique (1) est moulée par injection et d'un seul tenant une pièce (9) en forme de manchon qui entoure le manchon (4) du tuyau métallique (2), dont le diamètre intérieur libre (10) correspond au diamètre intérieur des tuyaux (1, 2) et dont le diamètre extérieur est supérieur au diamètre extérieur du manchon (4) en forme de cloche, le matériau thermoplastique de la pièce moulée par injection (9) comblant l'espace compris entre le diamètre intérieur libre (10) et le diamètre intérieur du manchon (4) en forme de cloche en imposant une précontrainte à l'anneau d'étanchéité (6).

2. Raccord de tuyaux selon la revendication 1, caractérisé en ce que, dans la zone de son diamètre supérieur à celui du tuyau métallique (2), le manchon (4) en forme de cloche est pourvu d'ouvertures (8) qui sont comblées par la matière synthétique thermoplastique de la pièce moulée par injection (9).

3. Raccord de tuyaux selon la revendication 1 ou 2, caractérisé en ce que l'anneau d'étanchéité (6) est conçu sous la forme d'un anneau d'étanchéité à lèvres doubles et à profil en U.

4. Raccord de tuyaux selon l'une des revendications 1 à 3, caractérisé en ce que la pièce moulée par injection (9) se prolonge en formant un tube protecteur (11) entourant le tuyau métallique (2).
